# EUROPEAN PATENT SPECIFICATION

(11) **EP 0 424 980 B1**
(45) Date of publication and mention of the grant of the patent: **19.01.1994**
(21) Application number: 90121773.7
(22) Date of filing: 02.12.1987
(51) Int. Cl.: G11B 21/08, G11B 7/085

(54) **Optical disk drive device and information storage device**
Optisches Scheibebetriebsgerät und Informationsspeichergerät
Appareil de disques optiques et appareil d'emmagasinage d'information

(30) Priority: 02.12.1986 JP 288423/86; 15.06.1987 JP 147033/87; 30.04.1987 JP 104744/87; 29.06.1987 JP 159834/87; 05.08.1987 JP 196842/87
(43) Date of publication of application: 02.05.1991
(62) Divisional of application: 87310615.7
(73) Proprietor: MITSUBISHI DENKI KABUSHIKI KAISHA, Tokyo (JP)
(72) Inventor: Ogawa, Masaharu, c/o Mitsubishi Denki K.K., Amagasaki-ahi, Hyogoken (JP)
(74) Representative: Barnard, Eric Edward

(56) References cited:
- EP-A- 0 138 275
- DE-A- 3 604 604
- RESEARCH DISCLOSURE vol. 2244, no. 265, May 1986, NEW YORK, USA page 253; 'Tracking Aquire on an Optical Disk'
- PATENT ABSTRACTS OF JAPAN vol. 9, no. 246 (P-393)(1969) 3 October 1985 & JP-A-60-098 534
- PATENT ABSTRACTS OF JAPAN vol. 10, no. 266 (P-496)(2322) 11 September 1986 & JP-A-61-092 438

## Description

### FIELD OF THE INVENTION

The present invention relates to an information storage device capable of recording, reproducing, or erasing information on or from an information storage medium having multiple tracks. More specifically, the invention relates to an information storage device, which even in the case of failure of a seeking operation or the like can be quickly controlled for stable operation.

### BACKGROUND OF THE INVENTION

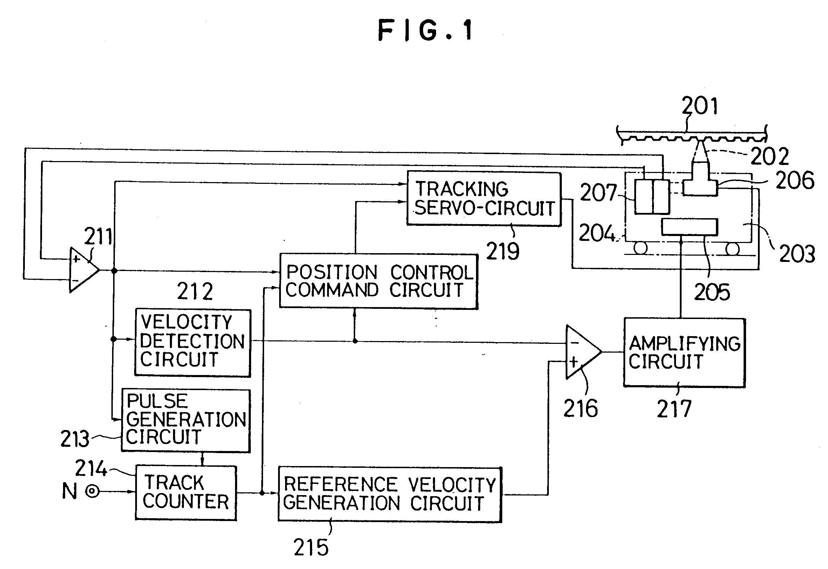

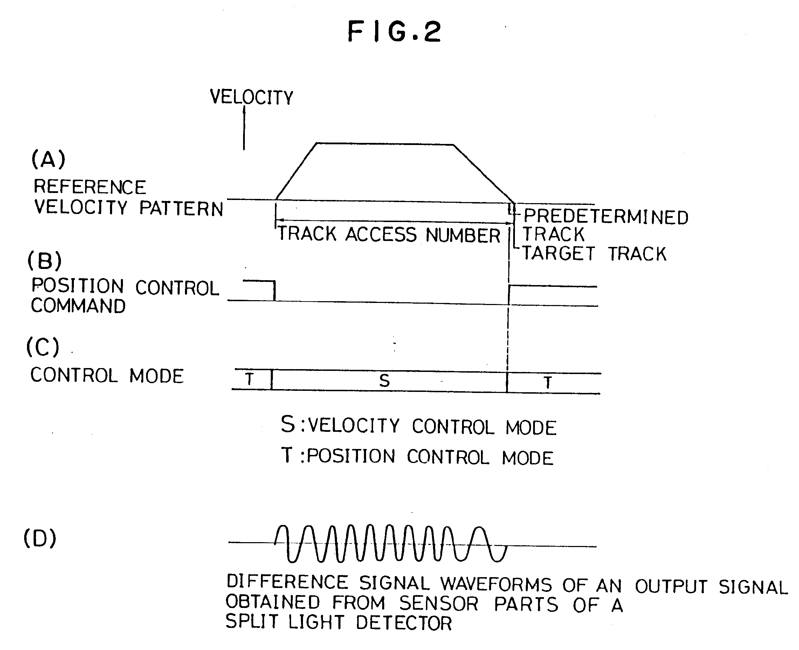

An example of prior art is explained below with reference to Figure 1 and Figure 2.

Figure 1 illustrates a block diagram which shows a control system of a known optical disk drive device as defined in the preamble of appended claim 1 and which is published in Papers from the General Meeting of the Institute of Electronics and Communications Engineers (IECE) of Japan, 1985, Vol. 7, pp. 7-76 [1170, "Track Access in a Two-Stage Servo-System", by Hiroshi Inada and Shigeru Shimono]. Figure 2 illustrates waveforms of control signals used in connection with the device shown in the block diagram. In these drawings, reference numeral 201 designates an optical disk for recording information, or with information already recorded on tracks which are arranged in the form of equally-spaced concentric circles or in the form of a spiral. Reference numeral 202 designates a light beam by means of which information is transferred to and from the optical disk. A head actuator, e.g., a linear actuator 205 drives a carriage 204 of an optical head 203 and moves the carriage 204 with respect to the optical disk 201 and across the tracks. A tracking actuator 206 is installed on the carriage 204 and carries a focusing lens for the formation of a spot of light beam 202 on the tracks of the optical disk 201. The tracking actuator 206 is moved in the same direction as the linear actuator 205 and can cover only a relatively small, predetermined number of tracks. A split photodetector 207 which detects the information signal transmitted by the optical beam 202 and converts it into an electrical signal and outputs the electrical signal. A sensor of this detector consists of two parts. Each such part of the sensor produces on its output an electric signal corresponding to the quantity of light of the light beam 202 which is incident on this part.

A subtraction amplifier 211 receives a signal from each sensor part of the split photodetector 207, performs subtraction, and thus detects deviation of light spot of beam 202 from the center of the track on optical disk 201. A velocity detection circuit 212 detects, on the basis of an output signal from the subtraction amplifier 211, the track traverse velocity (the velocity with which the light spot of beam 202 traverses the tracks of optical disk 201 in its movement across the disk). A pulse generation circuit 213 receives signals from the subtraction amplifier 211 and generates a pulse each time the light spot of the beam 202 crosses a track on the disk. A track counter 214 receives a signal corresponding to the track access number N (the number of the tracks that must be traversed to reach the target track from the initial (currently-positioned) track) supplied from outside. The track counter 214 receives pulse signals from the pulse generation circuit 213 and counts down by "1" each time a pulse is applied to it, and its count value is the remaining tracks to be traversed to reach the target track. A reference velocity generation circuit 215 receives from the track counter 214 a signal corresponding to the remaining number of tracks, initially determines the reference velocity pattern corresponding to the number of the remaining track, memorizes this pattern, and then sequentially produces on its output the reference velocity signals corresponding to gradual decrease in the number of remaining tracks counted by the counter 214. A velocity error detector 216 receives a reference velocity signal from the reference velocity generation circuit 215 and a light spot velocity signal from the velocity detection circuit 212, and which detects the difference in velocities. An amplifying circuit 217 amplifies an output signal of the velocity error detection circuit 216 and controls the linear actuator 205. A position control command circuit 218 receives signals from the operational amplifier 211, the velocity control circuit 212, and the track counter 214. When on a predetermined track the velocity of the light spot of beam 202 drops below a predetermined value, the position control command circuit 218 produces a position control command on its output. A tracking servo-circuit 219 receives a position control command from the position control command circuit 218 and thus controls operation of the tracking actuator 206.

The above-described conventional optical disk drive device operates as follows: Track-access control is comprised of a velocity control mode and a position control mode. In the velocity control mode, the carriage 204 is driven by the linear actuator 205, to cause movement of the light spot in the direction of traverse of the tracks of the optical disk 201. In the position control mode, after the velocity of the light spot of the light beam 202 has been reduced below a predetermined velocity at the predetermined track, the tracking actuator 206 is controlled and the light spot is stopped at the position where the spot coincides with the center of a track on the disk 201 (Figure 2A to 2C). First, in the velocity control mode, a signal which corresponds to track access number supplied from outside (number N in Figure 1) is sent to the track counter 214. Because at the very beginning there are no pulses from the pulse generation circuit 213, so the number of the remaining tracks is left unchanged and the generated signal corresponds to this particular number N. Receiving this signal, the reference velocity generation circuit 215 initially determines the reference velocity pattern (Figure 2A), and then sequentially outputs reference velocity signals in accordance with the number of remaining tracks as counted by the track counter 214. The reference velocity signal and the light spot velocity signal, which is produced by the velocity detection circuit 212, are input to the velocity error detection circuit 216 where both signals (i.e., of detected and reference velocities) are compared. The difference is amplified by the amplifier 217, and the amplified signal is used to control the velocity of the linear actuator 205. In accordance with the reference velocity pattern, the linear actuator 205 makes acceleration up to a predetermined number of tracks, the velocity is then stabilized until a predetermined number of tracks is reached, when the deceleration is made.

In this way, the light spot of beam 202 moves across the optical disk to reach the target track. When the light spot of beam 202 traverses a track, the quantity of light reflected from the optical disk 1 will change. As the sensor of photodetector 207 consists of two parts, the quantity of light reflected onto each sensor part also will vary. The light reflected onto the sensor is converted to electrical signals which correspond to the amount of light received by the sensor and which are output from the sensor parts. The output signals from the sensor parts are input to the subtraction amplifier 211 performs subtraction to produce a difference signal as shown in Figure 2D. In this difference signal waveform, a zero point of each cycle corresponds to the moment when the center of the track on optical disk 1 coincides with the center of the light spot of beam 202. The velocity detection circuit 212 receives the output difference signals from the subtraction amplifier 211 and detects on the basis of these signals the track traverse velocity. The pulse generation circuit 213 generates pulses, for example, at the moment of each cycle when the difference signal waveform of the output from the subtraction amplifier 211 passes through zero. Each such pulse is used as a signal indicating that the light spot of beam 202 crossed the track. The pulses are supplied to the track counter 214. The position control command circuit 218 receives output signals of the subtraction amplifier 211, the velocity detection circuit 212, and the track counter 214. If at the moment of arrival of the light spot at a position with a predetermined number of tracks to the target track, e. g., one track to the target one, the velocity is below a predetermined value, the position control command circuit 218 will issue an output command which will switch the system to the position control mode.

In the position control mode, the tracking servo-circuit 219 receives the output signals of the position control command circuit 218 and the subtraction amplifier 211, and controls the tracking actuator 206 referring to the phase of the difference signal waveform from the subtraction amplifier 211. When the center of the target track of the optical disk 201 coincides with the center of the light spot of beam 202, the tracking actuator stops. Thus, pull-in into the track is completed. The light spot of beam 202 follows the target track, and recording and reproduction of information is conducted.

In the known optical disk drive device of the type described above, the carriage 204 is driven by the linear actuator 205, and when the target track is reached and operation of the linear actuator 205 and tracking actuator 206 is switched from the velocity control mode to the tracking control mode, the detected speed may be disturbed either by defects in optical disk 201, or by sudden deviation in the actual velocity due for example to external forces. As a result, the pull-in by the tracking servo-circuit 219 may not be achieved. In such a case, the system may behave erratically, unless an external position or velocity scale is provided.

A similar information storage device is described in Research Disclosure Bulletin, Vol. 2244, No. 265, May 1986, page 253 or in DE-A- 3604604. In These known devices the generated tracking error signal is used to detect whether the velocity is small enough before elasing the tracking servo.

### SUMMARY OF THE INVENTION

An object of the present invention is to provide such an information storage device for recording, reproducing, and erasing information on or from the information storage medium, which does not require an external scale (which some conventional system employ) and which is capable of avoiding erratic behavior in the event of an off track (departure from the target track) which may occur during tracking mode due for example to external forces, and which is capable of returning the light spot to the area in the vicinity of the target track and of continuing its operation in the tracking mode.

According to the invention as defined in appended claim 1, there is provided an information storage device which comprises: a head for recording, reproducing, and erasing the information on or from the information storage medium, head drive means for driving a movable portion of the head in a track-traverse direction; tracking control means which allows the tip of the head to follow the center of the track; off-track detection means; and means for controlling the velocity with which the tip of the head traverses the tracks.

When an off-track (departure of the light spot from the target track) occurs during tracking control, this is is detected, and the tracking control is interrupted, the track traverse velocity is controlled, and when the track traverse velocity is reduced below a value at which pull-in into the tracking is possible, the tracking control is resumed.

### BRIEF DESCRIPTION OF THE DRAWINGS

Figure 1 is a diagram of another known device.

Figure 2 shows waveform explaining operation of the known device of Figure 1.

Figure 3 is a block diagram illustrating a device of in another embodiment of the invention.

Figure 4 is block diagram of a velocity control system for the device.

Figure 5 is a diagram which illustrates some details of the elements of the system.

Figure 6 is a diagram showing details of the track traverse velocity detection means used in the device of the above embodiment.

Figure 7 to Figure 9 show waveforms of signals used for explanation of operation of the device.

Figure 10 is a block diagram of a modification of the device of the above embodiment.

### DETAILED DESCRIPTION OF THE EMBODIMENTS

An embodiment of the invention will now be described with reference to the drawings.

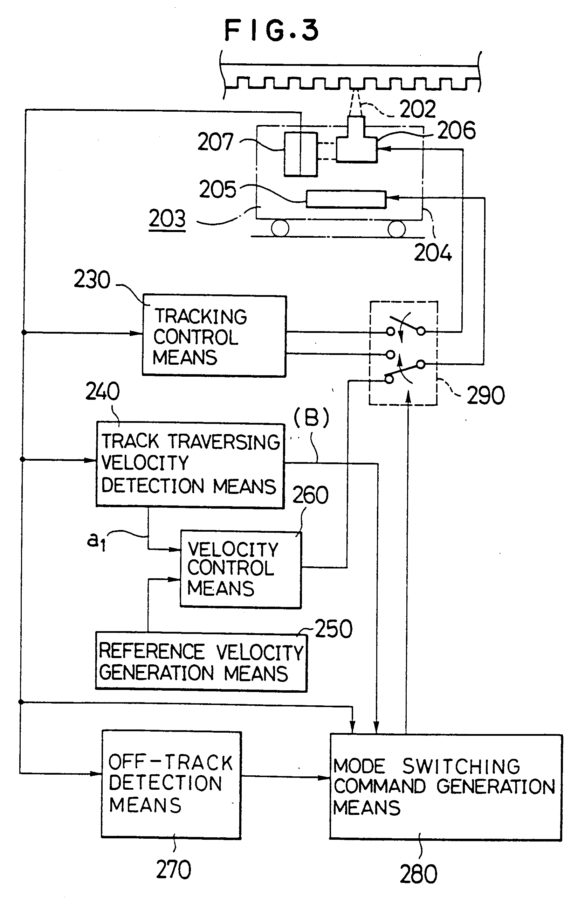

Figure 3 illustrates a system in accordance with another embodiment of the invention. In Figure 3, reference numerals 201 to 207 designate the same elements as in the previously described known system shown in Figure 1 and Figure 2. Reference numeral 230 designates tracking control means, which on the basis of output signals from the photodetector 207, guide the light spot, which is formed by the beam 202, along the center of the track on the optical disk 201. A track traverse velocity detection means 240 detect the track traverse velocity (the velocity with which the light spot traverses the tracks) on the basis of the output from the photodetector. A reference velocity generation means 250 generate a reference velocity which forms a target value for the track traverse velocity (the velocity with which the light spot traverses the tracks). A speed control means 260 control the drive of a linear actuator 205, so that the track traverse velocity detected by the track traverse velocity detection means 240 coincides with the reference velocity, which is output from the reference velocity generation means 250. An off-track detection means 270 detects off-track (departure of the light spot from correct or target track) during movement of the light spot along the center of the track and produces an off-track signal upon detection of the off-track. A mode switching command generation means 280 make switching between the tracking control mode and the velocity control mode on the basis of the track traverse velocity detected by track traverse velocity detection means 240 and the off-track detection signal obtained from the output of the off-track detection means 270. A control mode switching means 290 switches the control mode of the tracking actuator 206, and the linear actuator 205, depending on the command from the output of the mode switching command generation means 280.

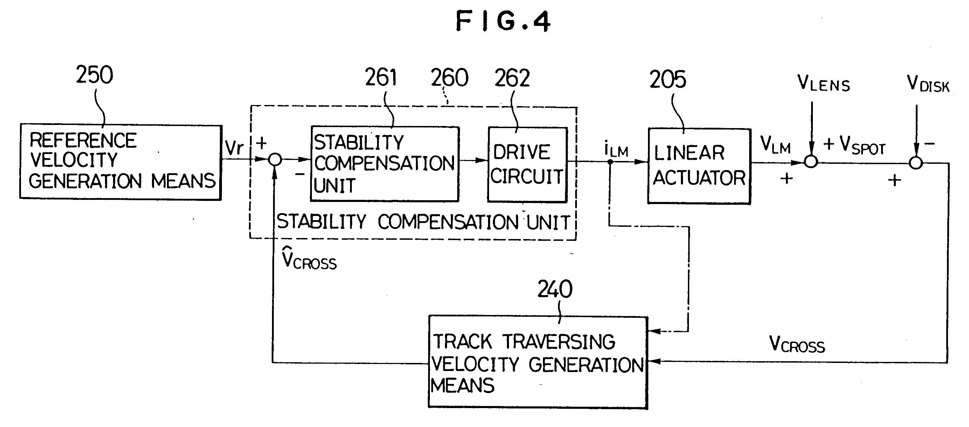

Figure 4 is a block diagram of a velocity control system which controls the track traverse velocity in the device of the above-described embodiment. In Figure 4, reference numerals 205, 240, 250 and 260 designate the same elements as those shown in Figure 3, reference numeral 261 designates a stability compensation unit which is intended for stabilization of the velocity control system and located inside velocity control means 260. In general, a gain element is used for this unit. A drive circuit 262 is intended for driving the linear actuator 205. In general, a constant-current drive circuit is used for this circuit. Operating current i_{LM} is is caused by the drive circuit 262 to flow through the linear actuator 205, so that the linear actuator 205 moves at the velocity V_{LM}. The sum of the objective lens velocity V_{LENS} and the linear actuator velocity V_{LM} makes the absolute velocity V_{SPOT} of the light spot, and the difference between the absolute velocity V_{SPOT} and the track fluctuation velocity V_{DISK} of the optical disk 201 makes the track traverse velocity V_{CROSS}. The track traverse velocity detecting means 240 detects the track traverse velocity V_{CROSS}. The signal indicative of this detected track traverse velocity is denoted by V_{CROSS}. Because it is difficult to accurately detect the correct track traverse velocity on the basis of the output from the photodetector 207 alone, the drive current i_{LM} of the linear actuator 205 may be used in combination.

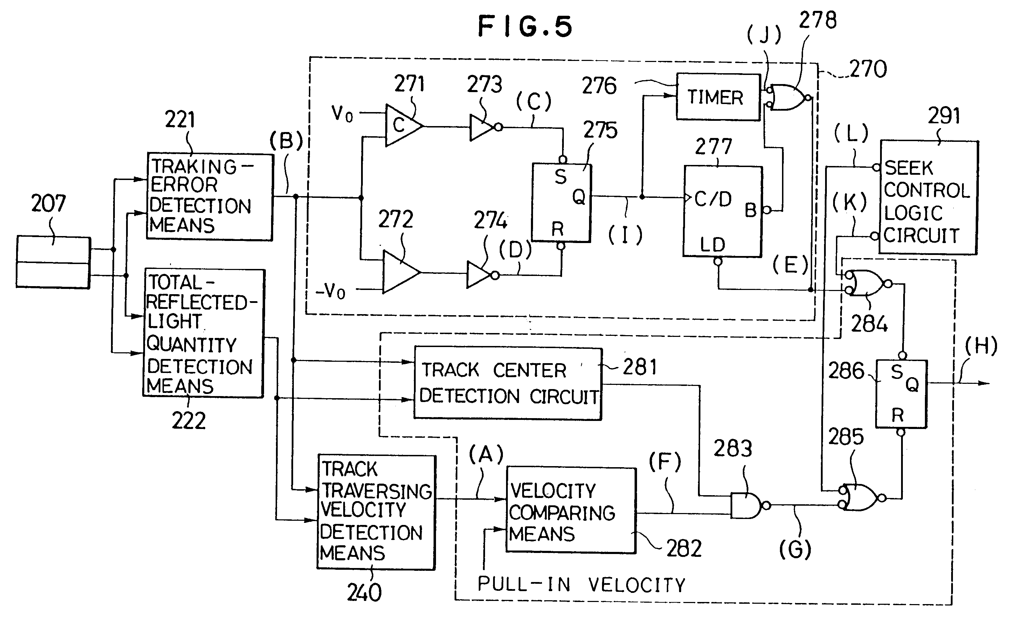

Figure 5 is a diagram which is used for a detailed explanation of the off-track detection means 270 and the mode switching command generation means 280, used in the device of the above-described embodiment.

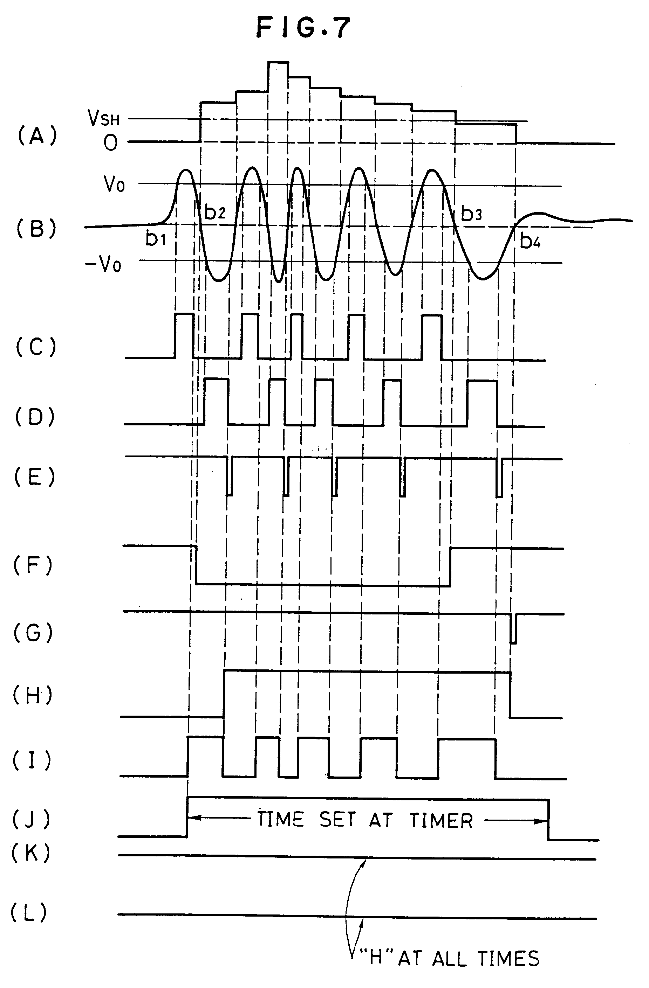

In Figure 5, reference numerals 207, 240, 270 and 280 designate the same elements which are shown by these reference numerals in Figure 3. The tracking-error detecting means 221 receive the output of the photodetector 207 and produces a tracking-error signal. The total quantity detecting means 222 receives the output of the photodetector 207, detects the total quantity of the reflected light, and produces a total reflected light quantity signal. The comparator 271 compares the level of the tracking-error signal obtained from the tracking-error detection means 221 with V₀. The comparator 272 compares the level of the tracking-error signal from the tracking-error detection means 221 with -V₀. The comparators 271 and 272 detect deviation of the light spot from the center of the track exceeding a predetermined distance, and produces on its output a logic signal indicative of the deviation exceeding the predetermined distance. Inverters 273 and 274 invert the polarities of the output signals of the comparators 271 and 272. An RS flip-flop 275 receives on its set and reset terminals respective output signals of the inverters 273 and 274. A timer 276 issues a gate signal of a predetermined duration T (Figure 7(J)), the gate signal being raised upon transition of the output of the RS flip-flop 275 from the low to high level. A counter 277 is loaded with, a predetermined value, e.g., "0" and counts down by "1" each time a pulse is applied to its C/D input from the RS flip-flop 275 (each time its input to its C/D terminal falls from High to Low), and when the result of the count down becomes negative, it produces on its output (B) a Borrow signal. (Because the counter produces the Borrow signal when its count value becomes negative (- 1) and this Borrow signal is utilized for the generation of the off-track signal, the above-mentioned "predetermined value" should be one short of the number of the tracks upon traverse of which the off-track signal is desired to be produced.) This Borrow signal is applied to an AND gate 278 and is ANDed with the output of the timer 276. The output (E) of the AND gate 278 is the off-track signal which is produced each time the light spot that has deviated from the target track traverses other (neighboring) tracks. This Borrow signal is applied through an AND gate 284 being opened because of its other input (K) being High to a set terminal of an RS flip-flop 286, to set the flip-flop 286, and its output (H) is raised to High.

The off-track signal (E) is also applied to the load terminal (LD) of the counter 277 to load the counter with the predetermined value, e.g., "1." The counter 277 then starts counts down from the predetermined value again.

The function of the timer 276 is to disregard any single high to low transition (at the output of the flip-flop 275) due for example to a defect on the medium.

A track center detection circuit 281 detects the position of the track center on the basis of output signals from the tracking-error detection means 221 and the total-reflected-light-quantity detection means 222. A velocity-comparing means 282 detects the track traverse velocity which is detected by the track-traverse velocity detection means 240, becomes lower than a pull-in velocity (the velocity below which pull-in by the track control means 230 is possible). A NAND gate 283 produces a pulse corresponding to the track center only when the track traverse velocity is below the pull-in velocity (the velocity below which the light spot is capable of being pulled into the tracking control mode (in which it follows the center of the track under the control of the tracking control means). A seek control logic circuit 291 generates a command for switching into the tracking control mode, promptly when the light spot reaches the target track during seeking of a track by means of velocity control of the linear actuator 205. This command is generated in the seek control logic circuit 291 responsive to a pulse indicative of the center of a track after the counter produces the Borrow signal, and is supplied from the mode switching command generation means 280 to the control mode switching means 290. An OR gate 284 sets the flip-flop 286 (by applying a signal to the set terminal of the flip-flop 286) at the time when seek-initiation command is received from the seek control logic circuit 291, or an off-track signal E is received from the counter 277. Another OR gate 285 resets the flip-flop 286 (by applying a signal to the reset terminal of the flip-flop 286), when the seek control logic circuit 291 produces a tracking initiation command, or when a NAND gate 283 produces a track center pulse (at the low velocity period). On the basis of outputs from the OR gates 284 and 285, the RS flip-flop 286 issues a command for switching between the tracking control mode and the velocity control mode.

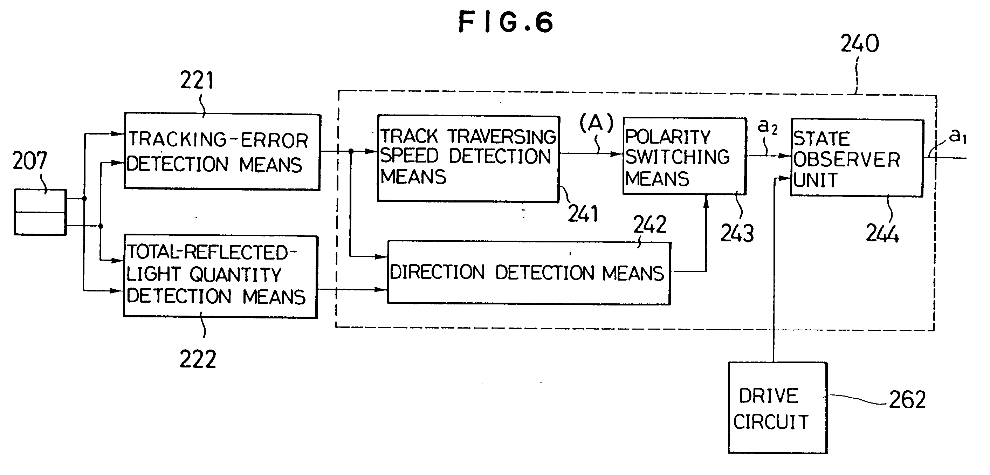

Figure 6 illustrates details of the track traverse velocity detection means 240. In Figure 6, reference numerals 207, 221, 222, 240 and 262 designate identical parts shown in the previous drawings. A track traverse speed detection means 241 detects the track traverse speed (A) from the tracking-error signal. A direction detection means 242 detects from the tracking-error signal and the total-reflected-light-quantity signal, the track-traverse direction (direction in which the light spot traverses the tracks) A polarity switching circuit 243 switches (selects) the polarity of the track traverse speed (A) on the basis of the direction detected by direction detection means. A state-observer unit 244 receives on its input an operating (drive) current signal obtained from the output of the drive circuit 262, as well as a track traverse detection velocity (a₂) obtained from the polarity switching circuit 243. On the basis of the signals received, the state-observer unit produces an estimated track traverse velocity (a₁) which is more accurate (or has a smaller delay) than the detected velocity (a₂).

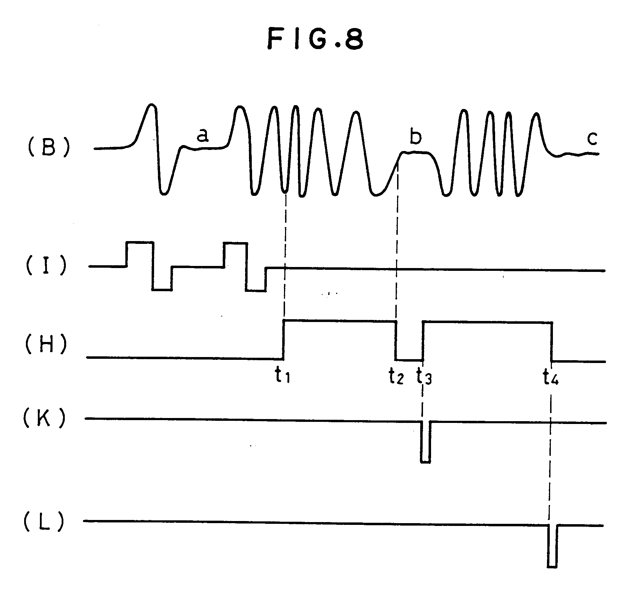

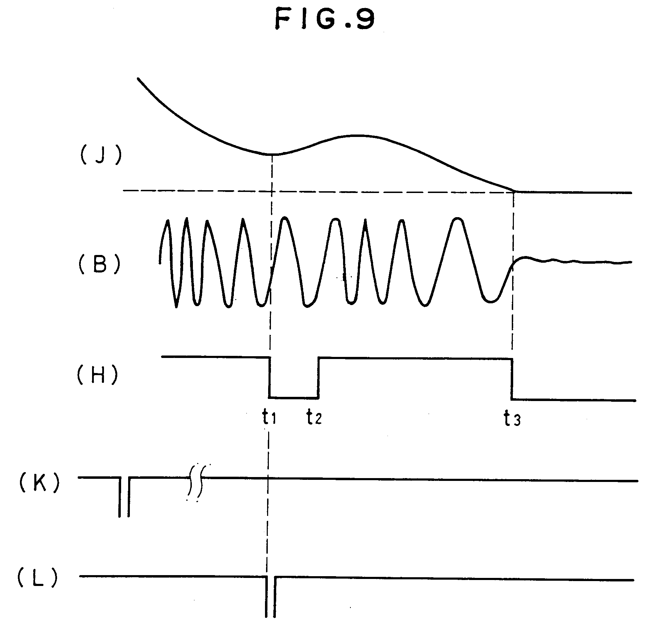

Operation of the system made in accordance with the above embodiment will now be explained with reference to Figure 7 to Figure 9. In these drawings, Figure 7 is used for explaining the case of an off-track under the effect of impact or a similar external factor which may affect the device during tracking. Figure 8 is a drawing which explains an off-track due to a failure in track-jump operation. Figure 9 explains operation in the case of an off-track because of a failure in the operation of pull-in by the tracking servo system immediately after a macroseeking operation.

In Figure 7 to Figure 9, (A) designates a track traverse speed, (B) designates a tracking-error signal, and (C) and (D) designate results of comparison made by the respective comparators 271 and 272, specifically the outputs of the inverters 273 and 274, shown in Figure 5. (E) designates an off-track detection signal, (F) is an output of the velocity comparing means 282 which show that the track traverse velocity is lower than the pull-in velocity. (G) designates an output of the NAND gate 283, (H) designates control mode switching command, (I) designates a track-jump pulse, and (J) designates an actual track traverse velocity.

The system described above operates in the following manner: First, as shown in Figure 3, any off-track, which may occur in the course of movement of the light spot along the center of a track during the tracking control mode, is detected by the off-track detection means 270 on the basis of an output from photodetector 207. The off-track detection signal is transmitted to the mode switching command generation means 280. As a result, the control mode switching means 290 is switched to assume the state opposite to that shown by the arrows (in Figure 3), so that the system is switched from the tracking control mode of operation performed mainly by the tracking actuator 206, to the velocity control mode of operation by the linear actuator 205.

In this velocity control mode of operation, the reference velocity generation means 250 generate a reference velocity which is lower than the pull-in velocity (the velocity below which which the light spot can be pulled into the tracking mode under the control of the tracking control means 230). For example, when the reference velocity generation means produces an output equal to zero, the track traverse velocity is controlled by the velocity control means 260 so that the track traverse velocity as detected by the track traverse velocity detection means 240 coincide with the reference velocity. In other words, the track traverse velocity is automatically decreased to zero. At the same time, the mode switching command generation means 280 keeps monitoring the output of the track traverse velocity detection means 240, and when it is detected that the light spot has reached the center of a track immediately after the track traverse velocity has fallen below the pull-in velocity, on the basis of the output of the photodetector 207, the tracking control mode command is generated at the seek control logic circuit 291 and supplied through the the mode switching command generation means 280 to the control mode switching means 290, which is thereby is switched to the tracking control mode, and tracking control is restarted.

Operation of the system shown in Figure 5 will now be described in detail with reference to Figure 7.

If in the course of the track control operation, for some unexpected cause, such as an impact, or a crack on the medium surface of the optical disk 201, the target track may be missed at point b₁ (Figure 7B), then the track traverse speed will be detected as a reciprocal of the time required for a half-period of the tracking-error signal (B), and the track traverse speed will be detected for the first time when the light spot is at a half-tracking-error point b₂ (at a point midway between the target track and the adjacent track). Meanwhile, the comparators 271 and 272 compare the level of the tracking-error signal (B) with V₀ and -V₀ and generate on their outputs track reverse detection pulses (C), and (D). With the use of the RS flip-flop 275, each track traversed by the light spot will be counted down by the counter 277 which will produce a pulse on its output. At the same time, the timer 276 will be reset. For example, if the counter 277 was preliminarily loaded with "1," each time one track is traversed, an off-track detection signal (E) is produced. Under the effect of this signal, the counter 277 will be again loaded with "1," and the RS flip-flop 286 will be set. As a result, the control mode switching command signal (H) will become a velocity control command. In the velocity control mode, the velocity control means will reduce the track traverse velocity until it coincides with the reference velocity (equal, e.g., to zero), and in the center of the track (point b₄) where the light spot is positioned at the center of the track immediately after the time point b₃ where the reduction of the velocity below V_{SH} (below at which the entering into the tracking operation becomes possible), the track center pulse (G) will reset the RS flip-flop 286, the control mode switching command signal (H) will become the tracking control command, and the light spot will be safely pulled into the center of a track (b₄) in the vicinity of the track from which the off-track has occurred. Figure 7 shows the case in which the light spot is pulled into a center of a track separated by five tracks from the initial track. If the light spot cannot enter the center of the track in point b₄ as well, e.g., because of a crack in the medium, the off-track will be detected again, the speed will be reduced through the velocity control mode, and the above-described operation will be repeated until the light spot safely enter the tracking operation.

Figure 8 illustrates the case where an off-track occurs in track jump. When the tracking actuator 206 is driven under the command of a track-jump operation and an off-track occurs, then similar to the case of Figure 7, the off-track will be detected at the moment t₁ which corresponds to departure by 1 track from the center of the initial track. At the same time, the system will be switched to the velocity control mode, and by means of driving the linear actuator 205 the track traverse velocity is reduced. At point t2, when the velocity becomes below the pull-in velocity, the tracking control means 230 will then again switch the system to the tracking control mode, and in point b a stable tracking becomes possible. This point b is four tracks away from the target track to be reached by the track jump operation. In order to pass from this track position b to the target track, a seek operation over four tracks in the reverse direction is made, taking the time period of from point t₃3 to point t₄, under the command of the seek control logic circuit 291. In this way, the target track is quickly reached.

Figure 9 illustrates the case where immediately after a macroseeking operation with drive of the linear actuator 205, the system could not enter the tracking. Because at time t₁, the light spot has reached the center of the target track during a macroseeking operation, the control mode switching command (H) will be switched from the velocity control mode to the tracking control mode. Because at this moment, however, an actual tracking traverse velocity (J) is higher than required, the light spot cannot be pulled into the center of the target track, and this will cause an off-track. The off-track is detected at time point t₂, and the system is switched to the velocity control mode, at time point t₃, when the velocity is sufficiently reduced, the system will again be switched to the tracking control mode, so that the light spot will safely enter the tracking position. After that, the macroseeking operation, or the track-jumping operation is repetitively made in the reverse direction, for the same number of tracks for which the light spot has surpassed, similar to the case of Figure 8.

An example of the velocity detection operation under the velocity control mode will now be described with reference to Figure 6.

On the basis of an output signal from the photodetector 207, the tracking-error detection means 221 generates a tracking-error signal. The track traverse speed detection means 241 measures the half-period of the tracking-error signal, calculates the reciprocal of this value, and thus determines the track traverse speed. However, this track traverse speed is an absolute value of the velocity. The direction detection means 242 on the other hand detects the track traverse direction. The results of this detection are used for deciding the polarity of the track traverse speed signal (A) and applied to the polarity selecting circuit 243. The polarity selecting circuit 243 combines the speed with the polarity. In other words, it vectorizes the track traverse speed into a track traverse velocity signal a₂. The velocity may be controlled by simply making the signal a₂ to coincide with the reference velocity. However, the velocity control characteristics will be further improved with the use of the state-observer unit 244, which will produce an estimated track traverse velocity a₁ on the basis of the operating-current information of the linear actuator 205 obtained from the drive circuit 262, and performs the control such that the velocity a₁ approaches and coincides with the reference velocity. For the velocity signal used for the judgement of whether or not the track traverse velocity is at such a value as to enable the pull-in, either the output of the track traverse velocity detecting means 41 or the output of the state-observer unit 244 may be used.

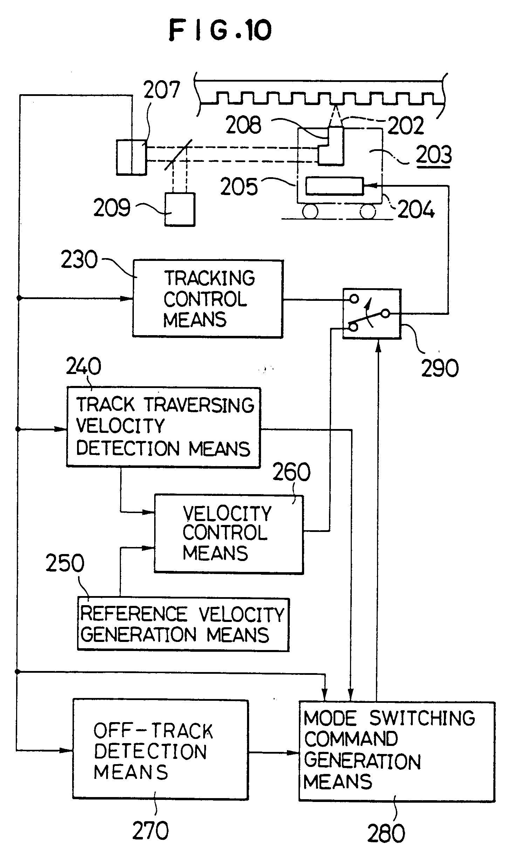

Figure 10 shows a modified form of the system of the present invention. Because in this drawing, the reference numerals identical to those of Figure 3 designate the same elements, their description is omitted. A laser diode 209 is used as a source of light. An optical system 208 includes a mirror for re-directing the light beam from the laser diode 209, and an objective lens for focusing the light beam 202. The modified system differs from the embodiment of Figure 3 in that the mass of movable parts is reduced by separating the photodetector 207 and the laser diode 209, which function as the light source, from the remaining elements of the optical head, so that only the linear actuator 205 participates in the tracking motion. The output signals of the control mode switching means 290 are transmitted only to the linear actuator 205. As a result, there is no need for the linear actuator to drive the entire optical head, but rather only its part.

In the modified embodiment, the head actuator comprises a linearly-movable voice-coil type linear motor, but invention is not limited only to this embodiment. For instance, the head actuator may comprise a swing-arm type rotary actuator. Although a tracking actuator 206 is used for reduction of the track traverse velocity, it can be substituted by a linear actuator 205 with a low range of motion, so that the track traverse velocity can be controlled in a wider scope.

In the embodiment illustrated above, the system was described with reference to an optical disk. It is understood however that the invention is not limited only to optical disks and that is equally applicable to magnetic disks or optical cards, provided that they are used in information storage devices and allow for recording, reproducing and erasing on or from the arbitrary information record medium having multiple tracks. The circuitry of the system can be reduced, if immediately after tracking deviation control the same velocity control means are used for the seeking operation.

As has been described above, in the information storage device described above with reference to Figure 3 to Figure 10, when an off-track occurs during tracking control this is detected and the control mode is switched into the velocity control mode, and after the track track traverse velocity has been regulated, the control mode is again returned to the tracking control mode. Accordingly, when a large impact is applied from outside or when an off-track occurs due to a large defect or scratch on the information storage medium, or when pull-in fails immediately after seeking, run-out of the head is prevented, and pull-in into a track in the vicinity of the target track can be achieved. It should be noted that this is achieved without resorting to an external scale as in the prior art. Thus, an information storage device which operates at a high speed and which is more reliable is obtained.

## Claims

1. An information storage device being capable of operation in a velocity control mode and a tracking control mode and comprising:
a head (205) for recording, reproducing, and erasing information on and from an information storage medium (201) having multiple tracks;
head driving means (205,206) for driving a movable part of said head in a track-traverse direction;
track control means (230) for controlling a tip of the head to follow the center of a track;
off-track detecting means (270) for detecting the departure of said tip of said head from the center of a track;
means for controlling the velocity (260) with which said (tip of said head traverses the tracks; and
mode switching command generation means (280,290) for switching control of said tip of said head between said velocity control mode and said tracking control mode; when the track traverse velocity is reduced to a predetermined small value said mode switching command generating means switches to said tracking control mode, characterised in that
when said off-track detection means detects said departure during tracking control mode, said mode switching command generation means (280) switches to said velocity control mode to effect control over the track traverse velocity to bring it to the predetermined.

2. The device of claim 1, wherein said predetermined small value is substantially zero.

3. The device of claim 1, wherein during control of the velocity with which the tracks are traversed by the tip of said head under the effect of said head driving means, said predetermined small value is set at a value which is lower than a velocity below which pull-in into the tracking on the target track can be effected.

4. The device of claim 1, wherein after control of the track traverse velocity under the effect of said head drive means, the track traverse velocity is detected for checking that it is below said predetermined value with which said track tracking control mode is entered, and the device is again switched to the tracking control mode.

5. The device of claim 1, wherein said information storage medium is an optical disk, and the tip of said head is a light spot.

## Patentansprüche

1. Informationsspeichervorrichtung, die in der Lage ist, in einem Geschwindigkeitssteuerbetrieb und einem Spurfolge-Steuerbetrieb zu operieren, und welche aufweist:
einen Kopf (203) zum Aufzeichnen, Wiedergeben und Löschen von Informationen auf einem bzw. von einem Informationsspeichermedium (201) mit einer Vielzahl von Spuren;
eine Kopfantriebsvorrichtung (205,206) zum Antrieb eines beweglichen Teils des Kopfes in Spurquerrichtung;
eine Spursteuervorrichtung (230) zum Steuern einer Spitze des Kopfes, damit diese der Mitte einer Spur folgt;
eine Spurabweichungs-Erfassungsvorrichtung (270) zur Erfassung der Abweichung der Spitze des Kopfes von der Mitte einer Spur;
eine Vorrichtung zum Steuern der Geschwindigkeit (260), mit der die Spitze des Kopfes die Spuren überquert; und
eine Betriebsumschaltungsbefehls-Erzeugungsvorrichtung (280,290) zum Umschalten der Steuerung der Spitze des Kopfes zwischen dem Geschwindigkeitssteuerbetrieb und dem Spurfolge-Steuerbetrieb, wobei, wenn die Spurüberquerungsgeschwindigkeit auf einen vorbestimmten kleinen Wert verringert ist, die Betriebsumschaltungsbefehls-Erzeugungsvorrichtung in den Spurfolge-Steuerbetrieb umschaltet;
**dadurch gekennzeichnet**, daß, wenn die Spurabweichungs-Erfassungsvorrichtung die Abweichung während des Spurfolge-Steuerbetriebs erfaßt, die Betriebsumschaltungsbefehls-Erzeugungsvorrichtung (280) in den Geschwindigkeitssteuerbetrieb umschaltet, um eine Steuerung der Spurüberquerungsgeschwindigkeit zu bewirken, derart, daß sie auf den vorbestimmten kleinen Wert gebracht wird.

2. Vorrichtung nach Anspruch 1, worin der vorbestimmte kleine Wert im wesentlichen null ist.

3. Vorrichtung nach Anspruch 1, worin während der Steuerung der Geschwindigkeit, mit der die Spuren von der Spitze des Kopfes unter der Einwirkung der Kopfantriebsvorrichtung überquert werden, der vorbestimmte kleine Wert so eingestellt ist, daß er niedriger ist als eine Geschwindigkeit, unterhalb der ein Einlauf in die Spurfolge auf der Zielspur bewirkt werden kann.

4. Vorrichtung nach Anspruch 1, worin nach der Steuerung der Spurüberquerungsgeschwindigkeit unter der Wirkung der Kopfantriebsvorrichtung die Spurüberquerungsgeschwindigkeit erfaßt wird, um festzustellen, daß sie unterhalb des vorbestimmten Wertes liegt, mit dem in den Spurfolge-Steuerbetrieb eingetreten wird, und die Vorrichtung wird wieder in den Spurfolge-Steuerbetrieb umgeschaltet.

5. Vorrichtung nach Anspruch 1, worin das Informationsspeichermedium eine optische Scheibe und die Spitze des Kopfes ein Lichtpunkt sind.

## Revendications

1. Dispositif de stockage d'informations capable de travailler dans un mode de commande de vitesse et dans un mode de commande de suivi, et comprenant :
une tête (205) servant à enregistrer, reproduire et effacer une information sur/et à partir d'un support (201) de stockage d'information ayant de multiples pistes ;
des moyens (205, 206) d'entraînement de la tête servant à entraîner une partie mobile de la tête dans une direction de franchissement des pistes ;
des moyens (230) de commande du suivi servant à commander une extrémité de la tête pour qu'elle suive le milieu d'une piste ;
des moyens (270) de détection de sortie de piste servant à détecter le déport de ladite extrémité de ladite tête par rapport au milieu d'une piste ;
des moyens (260) servant à commander la vitesse avec laquelle ladite extrémité de ladite tête franchit les pistes ; et
des moyens (280, 290) générateurs d'ordres de commutation de mode servant à commuter la commande de ladite extrémité de ladite tête entre ledit mode de commande de vitesse et ledit mode de commande de suivi, lorsque la vitesse de franchissement de pistes est réduite à une faible valeur prédéterminée, lesdits moyens qénérateurs d'ordres de commutation de mode commutent sur ledit mode de commande de suivi, caractérisé en ce que, lorsque lesdits moyens de détection de sortie de piste détectent ledit déport pendant le mode de commande de suivi, lesdits moyens (280) générateurs d'ordres de commutation de mode commutent sur ledit mode de commande de vitesse pour effectuer la commande de la vitesse de franchissement de pistes pour amener cette vitesse à la faible valeur prédéterminée.

2. Dispositif selon la revendication 1, dans lequel ladite faible valeur prédéterminée est sensiblement nulle.

3. Dispositif selon la revendication 1, dans lequel, pendant la commande de la vitesse avec laquelle les pistes sont franchies par l'extrémité de ladite tête sous l'effet desdits moyens d'entraînement de la tête, ladite faible valeur predeterminée est fixée a une valeur qui est inférieure à une vitesse au-dessous de laquelle on peut effectuer l'accrochage sur le suivi sur la piste cible.

4. Dispositif selon la revendication 1, dans lequel, aprés la commande de la vitesse de franchissement de pistes effectuée sous l'effet desdits moyens d'entraînement de la tête, la vitesse de franchissement de pistes est détectée pour vérifier si elle est au-dessous de ladite valeur prédéterminée avec laquelle le mode de commande de suivi de piste est entré et le dispositif est à nouveau commuté sur le mode de commande de suivi.

5. Dispositif selon la revendication 1, dans lequel ledit support de stockage d'information est un disque optique, et l'extrémité de ladite tête est un point lumineux.
